# EUROPÄISCHE PATENTANMELDUNG

(11) **EP 0 719 017 A2**
(43) Veröffentlichungstag der Anmeldung: **26.06.1996**
(21) Anmeldenummer: 95119005.7
(22) Anmeldetag: 02.12.1995
(51) Int. Cl.: H04M 1/03

(54) **Handapparat für Telefon- und Funksprechsysteme**

(30) Priorität: 22.12.1994 DE 4445840
(71) Anmelder: TEMIC TELEFUNKEN microelectronic GmbH, D-74072 Heilbronn (DE)
(72) Erfinder: Birmanns, Thomas, D-85057 Ingolstadt (DE)
(74) Vertreter: Maute, Hans-Jürgen, Dipl.-Ing.

(57) **Zusammenfassung**

Ein Handapparat für Telefon- und Funksprechsysteme besteht in der Regel aus einem Gehäuse, das ein Mikrofon, einen Lautsprecher, eine die elektronischen Komponenten tragende Leiterplatte und meistens eine aus einem gummiartigen Material (z. B. Silikon) bestehende Schaltmatte enthält, die in eine Tastatur integriert ist, so daß die Tasten der Tastatur zwecks Schließung von Schaltkontakten auf diese Schaltmatte einwirken. Erfindungsgemäß enthält die Schaltmatte einen der äußeren Form des Lautsprechers entsprechenden Hohlraum, so daß der Lautsprecher von der Rückseite oder einer der benachbarten Stirnseiten der Schaltplatte in diesen Hohlraum einführbar ist. Dadurch wird eine wesentliche Montagevereinfachung sowie ein stark verbesserter Schock- und Vibrationsschutz erzielt.

## Beschreibung

Die Erfindung betrifft einen Handapparat mit einem Mikrofon und einem Lautsprecher für Telefon- und Funksprechsysteme gemäß dem Oberbegriff des Patentanspruches 1.

Bekannte Handapparate sind derart aufgebaut, daß zur Installation von Lautsprecher und Mikrofon separate Montagemittel erforderlich sind, die zu einer aufwendigen und somit teuren Montage führen.

Die Aufgabe der vorliegenden Erfindung besteht darin, einen Handapparat der eingangs genannten Art anzugeben, der mit wenigen Einzelteilen aufbaubar ist und somit kostengünstig hergestellt werden kann.

Diese Aufgabe wird durch die kennzeichnenden Merkmale des Patentanspruches 1 gelöst, wonach die Schaltmatte mit einem der äußeren Form des Lautsprechers entsprechenden Hohlraum derart versehen ist, daß der Lautsprecher in diesen Hohlraum einführbar ist. Durch diese erfindungsgemäße Einbettung des Lautsprechers in die Schaltmatte ergibt sich neben der vereinfachten Montage außerdem eine akustische wie mechanische Entkopplung des Lautsprechers von den anderen Komponenten und Gehäuseteilen des Handapparates.

Vorzugsweise ist der Hohlraum für den Lautsprecher entweder von der Rückseite der Schaltmatte zugänglich oder ist taschenförmig so ausgebildet, daß der Lautsprecher von einer der benachbarten Stirnseiten in den Hohlraum einführbar ist.

In entsprechender Weise kann auch das Mikrofon oder ein Pieper mittels eines in ähnlicher Weise in der Schaltmatte ausgebildeten Hohlraumes integriert werden, so daß eine weitere Montagevereinfachung erzielbar ist.

Bei einer weiteren vorteilhaften Ausführungsform der Erfindung weist die Vorderseite der Schaltmatte im Bereich des den Lautsprecher aufnehmenden Hohlraumes eine Erhebung auf, die durch eine entsprechende Öffnung im Gehäuse geführt ist und die den diese Öffnung umgebenden Bereich des Gehäuses überragt. Diese Erhebung kann vorzugsweise einen oval- oder kreisförmigen oder sonstigen vorteilhaften Querschnitt aufweisen und stellt für das Gehäuse einen Kratzschutz dar, wenn es auf seiner Vorderseite liegt. Gleichzeitig stellt diese Erhebung zusammen mit der entsprechend dieser Erhebung ausgeformten Öffnung eine Arretierungshilfe beim Zusammenbau des Gehäuses mit der Schaltmatte dar.

Des weiteren führt diese Erhebung im Bereich des Lautsprechers zu einer verbesserten Handhabung durch den Benutzer des Handapparates, da dadurch die Wahrnehmung des gummiartigen, die Erhebung bildenden Materials am Ohr des Benutzers möglich ist und somit ein Weggleiten des Handapparates vom Ohr des Benutzers vermieden wird.

Ferner kann auch eine entsprechende Erhebung im Bereich des das Mikrofon aufnehmenden Hohlraumes sowie eine in dem Gehäuse anzubringende Öffnung vorgesehen werden, wodurch entsprechende Vorteile erzielt werden.

Schließlich kann der zur Aufnahme des Lautsprechers vorgesehene Hohlraum als auch der zur Aufnahme des Mikrofons vorgesehene Hohlraum jeweils so ausgebildet werden, daß im Bereich des Schallaustrittes bzw. des Schalleintrittes der Hohlraum so erweitert wird, daß ein Resonanzraum entsteht. Dadurch ist es möglich, verbesserte akustische Eigenschaften zu erzielen, insbesondere das Mikrofon bzw. den Lautsprecher mit einer verminderten elektrischen Leistung anzusteuern.

Weitere vorteilhafte Ausgestaltungen der Erfindung sind den abhängigen Ansprüchen zu entnehmen.

Im folgenden soll die Erfindung anhand von Ausführungsbei spielen im Zusammenhang mit den Zeichnungen dargestellt und erläutert werden. Es zeigen:
- Figur 1: eine Draufsicht auf ein Ausführungsbeispiel eines erfindungsgemäßen Handapparates,
- Figur 2: eine Schnittdarstellung des Ausführungsbeispieles nach Figur 1,
- Figuren 3 und 4: Schnittdarstellungen im Bereich des Lautsprechers weiterer Ausführungsbeispiele des erfindungsgemäßen Handapparates und
- Figuren 5 und 6: Schnittdarstellungen im Bereich des Mikrofons letzter Ausführungsbeispiele des erfindungsgemäßen Handapparates.

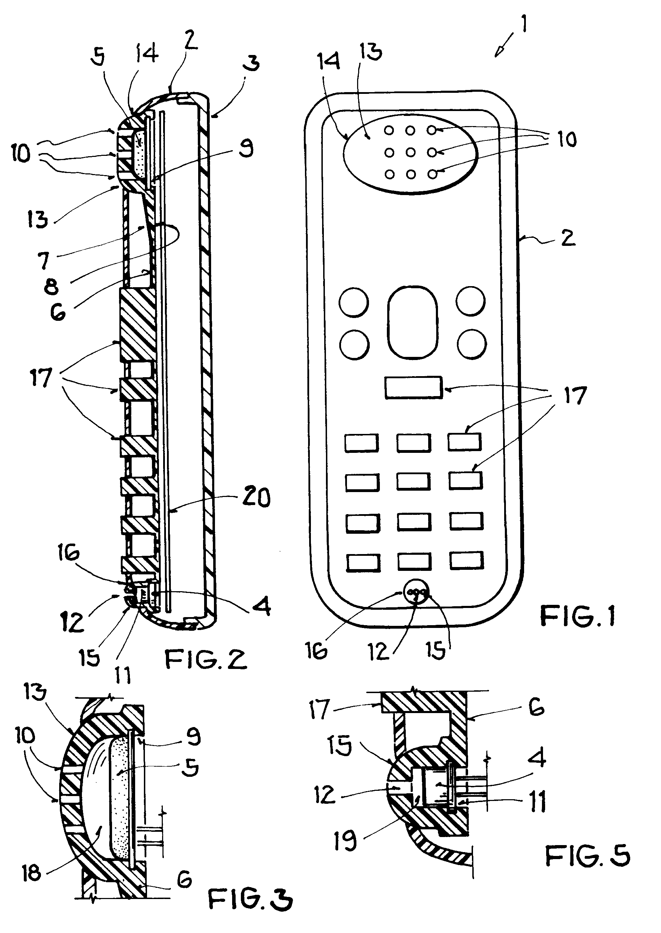

Der Handapparat 1 gemäß den Figuren 1 und 2 enthält in einem aus einem Oberteil 2 und einem Unterteil 3 bestehenden Gehäuse eine elektronische Bauelemente tragende Leiterplatte 20 sowie eine zwischen dieser Leiterplatte 20 und dem Oberteil 2 angeordnete Schaltmatte 6. Diese Schaltmatte 6 weist Tastaturknöpfe 17 zur Bildung einer Tastatur auf und enthält im oberen Randbereich einen Hohlraum 9 zur Aufnahme eines Lautsprechers 5. Dieser Hohlraum 9 ist von der Rückseite 8 der Schaltmatte 6 zugänglich und an die Form des Lautsprechers 5 angepaßt, so daß dieser Lautsprecher 5 von der Rückseite 8 aus in den Hohlraum 9 paßfest einführbar ist. Der Hohlraum 9 ist über mehrere Schallkanäle 10 mit der Vorderseite 7 der Schaltmatte 6 verbunden. In diesem Bereich des Hohlraumes 9 ist die Schaltmatte 6 auf der Vorderseite 7 mit einer Erhebung 13 versehen, die gemäß Figur 1 ovalförmigen Querschnitt aufweist und durch das Oberteil 2 des Gehäuses über eine entsprechend angepaßte Öffnung 14 geführt wird, so daß diese Erhebung 13 über den die Öffnung 14 umgebenden Bereich ragt.

Im unteren Endbereich der Schaltmatte 6 ist in ähnlicher Weise ein Hohlraum 11 zur Aufnahme eines Mikrofons 4 integriert. Von der Rückseite 8 der Schaltmatte 6 wird das Mikrofon 4 in diesen Hohlraum 11 paßfest eingeführt. Schallkanäle 12 stellen die Verbindung zwischen diesem Hohlraum 11 und der Vorderseite 7 der Schaltmatte 6 her. Schließlich ist auch im Bereich dieses Hohlraumes 11 auf der Vorderseite 7 der Schaltmatte 6 eine Erhebung 15 vorgesehen, die aus einer entsprechend geformten Öffnung 16 in dem Oberteil 2 des Gehäuses herausragt.

Der Vorteil dieser Hohlräume 9 und 11 für den Lautsprecher 5 bzw. das Mikrofon 4 bestehen darin, daß sich eine optimale akustische wie mechanische Entkopplung von den anderen in dem Handapparat angeordneten Komponenten sowie dessen Gehäuseteilen ergibt. Außerdem ergibt sich eine einfache Montage für den Lautsprecher und das Mikrofon, da diese Teile lediglich in den jeweiligen Hohlraum eingepreßt werden und somit weitere Montageteile nicht erforderlich sind. Die über das Gehäuse hinausragenden Erhebungen 13 und 15 im Bereich des Lautsprechers 5 bzw. des Mikrofons 4 dienen als Kratzschutz, wenn der Benutzer den Handapparat auf der Vorderseite ablegt.

Mit der Schaltmatte 6 gemäß der Figur 2 können noch weitere Funktionen integriert werden, so beispielsweise ein Abstandshalter für zwei Leiterplatten oder eine Halterung für eine auf die Vorderseite des Gehäuses geführte Leuchtdiode.

Durch die Einbettung von Lautsprecher 5 und Mikrofon 4 in die Schaltmatte 6 sowie ggf. weiterer Teile ergibt sich ein wesentlich besserer Stoß- und Vibrationsschutz dieser Teile.

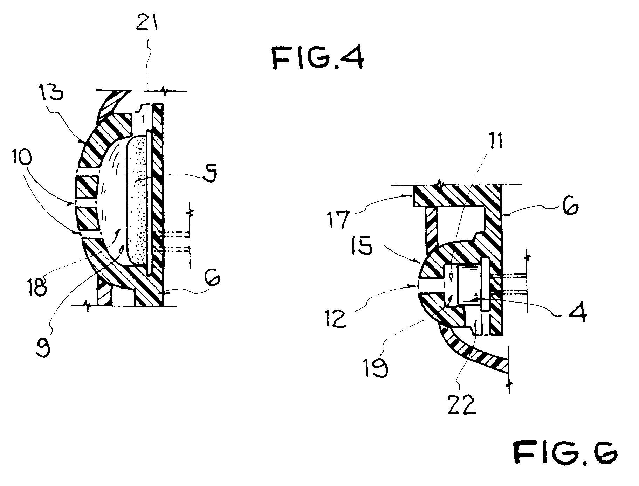

Die Figuren 3 und 5 zeigen einen Hohlraum 9 für einen Lautsprecher 5 bzw. einen Hohlraum 11 für ein Mikrofon 4, die so erweitert sind, daß im Bereich des Schallaustrittes bzw. der Schallaufnahme diese Hohlräume so erweitert sind, daß jeweils ein Resonanzraum 18 bzw. 19 entsteht. Ein solcher Resonanzraum 18 bzw. 19 kann leicht an entsprechende Anforderungen angepaßt werden, da bei der Herstellung einer entsprechenden Schaltmatte 6 nur geringe Werkzeugänderungen erforderlich sind. Ein solcher Resonanzraum führt zu verbesserten akustischen Eigenschaften.

Schließlich zeigen die Ausführungsbeispiele nach den Figuren 4 und 6 einen Hohlraum 9 für den Lautsprecher 5 bzw. einen Hohlraum 11 für das Mikrofon 4, die taschenförmig ausgebildet sind, so daß der Hohlraum 9 bzw. 11 über einen Schlitz 21 bzw. 22 für den Lautsprecher 5 bzw. das Mikrofon 4 zugänglich ist, wobei diese Schlitze 21 bzw. 22 jeweils an der kurzen Stirnseite der Schaltmatte 6 angeordnet sind. Somit können der Lautsprecher 5 sowie das Mikrofon 4 über diese Schlitze 21 und 22 in den entsprechenden Hohlraum 9 bzw. 11 unter Ausbildung eines Preßsitzes eingeschoben werden, so daß der Lautsprecher 5 und das Mikrofon 4 einen festen Sitz aufweisen.

Das in den Ausführungsbeispielen beschriebene Mikrofon kann auch lediglich die Funktion eines Piepers übernehmen.

## Patentansprüche

1. Handapparat (1) mit einem Mikrofon (4) und einem Lautsprecher (5) für Telefon- und Funksprechsysteme, wobei der Handapparat (1) aus einem Gehäuse (2, 3), einer eine Vorder- und Rückseite (7, 8) aufweisende Schaltmatte (6) und einer elektrische Bauteile tragenden Leiterplatte (20) aufgebaut ist, dadurch gekennzeichnet, daß die Schaltmatte (6) mit einem der äußeren Form des Lautsprechers (5) entsprechenden Hohlraum (9) derart versehen ist, daß der Lautsprecher (5) in diesen Hohlraum (9) einführbar ist.

2. Handapparat nach Anspruch 1, dadurch gekennzeichnet, daß der Hohlraum (9) derart ausgebildet ist, daß der Lautsprecher (5) von der Rückseite (8) der Schaltmatte (6) in diesen Hohlraum (9) einführbar ist.

3. Handapparat nach Anspruch 1, dadurch gekennzeichnet, daß der Hohlraum (9) taschenförmig ausgebildet ist, so daß der Lautsprecher (5) von einer der benachbarten Stirnseiten der Schaltmatte (6) in diesen Hohlraum (9) einführbar ist.

4. Handapparat nach Anspruch 1, dadurch gekennzeichnet, daß zum Zwecke des Schallaustrittes wenigstens ein Verbindungskanal (10) den Hohlraum (9) mit der Oberfläche der Vorderseite (7) der Schaltmatte (6) verbindet.

5. Handapparat nach einem der vorangehenden Ansprüche, dadurch gekennzeichnet, daß zur Aufnahme des Mikrofons (4) die Schaltmatte (6) einen weiteren, der äußeren Form des Mikrofons angepaßten Hohlraum (11) aufweist, so daß das Mikrofon (4) von der Rückseite (8) der Schaltmatte (6) in diesen Hohlraum (11) einführbar ist.

6. Handapparat nach einem der Ansprüche 1 bis 4, dadurch gekennzeichnet, daß zur Aufnahme des Mikrofons (4) die Schaltmatte (6) einen weiteren, der äußeren Form des Mikrofons angepaßten Hohlraum (11) aufweist, wobei dieser Hohlraum (11) taschenförmig ausgebildet ist, so daß das Mikrofon (4) von einer der benachbarten Stirnseiten der Schaltmatte (6) in diesen Hohlraum (11) einführbar ist.

7. Handapparat nach Anspruch 5 oder 6, dadurch gekennzeichnet, daß zum Zwecke des Schalleintritts wenigstens ein Verbindungskanal (12) den Hohlraum (11) mit der Oberfläche der Vorderseite (8) der Schaltmatte (6) verbindet.

8. Handapparat nach einem der vorangehenden Ansprüche, dadurch gekennzeichnet, daß die Vorderseite der Schaltmatte (6) im Bereich des den Lautsprecher (5) aufnehmenden Hohlraumes (9) eine Erhebung (13) aufweist, die durch eine entsprechende Öffnung (14) im Gehäuse (2) geführt ist und die den diese Öffnung (14) umgebenden Bereich des Gehäuses (2) überragt.

9. Handapparat nach einem der Ansprüche 5 bis 8, dadurch gekennzeichnet, daß die Vorderseite der Schaltmatte (6) im Bereich des das Mikrofon (4) aufnehmenden Hohlraumes (11) eine Erhebung (15) aufweist, die durch eine entsprechende Öffnung (16) im Gehäuse (2) geführt ist und die den diese Öffnung (16) umgebenden Bereich des Gehäuses überragt.

10. Handapparat nach einem der vorangehenden Ansprüche, dadurch gekennzeichnet, daß der zur Aufnahme des Lautsprechers (5) vorgesehene Hohlraum (9) derart ausgebildet ist, daß im Bereich des Schallaustritts des Lautsprechers (5) ein Resonanzraum (18) entsteht.

11. Handapparat nach einem der Ansprüche 5 bis 10, dadurch gekennzeichnet, daß der zur Aufnahme des Mikrofons (4) vorgesehene Hohlraum (11) derart ausgebildet ist, daß im Bereich der Schallaufnahme des Mikrofons (4) ein Resonanzraum (19) entsteht.

12. Handapparat nach einem der vorangehenden Ansprüche, dadurch gekennzeichnet, daß der Lautsprecher (5) und das Mikrofon (4) an gegenüberliegenden Randbereichen der Schaltmatte (6) angeordnet sind.

13. Handapparat nach einem der vorangehenden Ansprüche, dadurch gekennzeichnet, daß zwischen den Randbereichen der Schaltmatte (6) eine Tastatur sowie Anzeigeelemente angeordnet sind.
